(19) Europäisches Patentamt
European Patent Office
Office européen des brevets

(11) EP 3 254 768 A1

(12) EUROPEAN PATENT APPLICATION

(43) Date of publication:
**13.12.2017 Bulletin 2017/50**

(21) Application number: **16173589.9**

(22) Date of filing: **08.06.2016**

(51) Int Cl.:
***B05D 5/08*** *(2006.01)*
***C09G 3/00*** *(2006.01)*
***C08J 7/12*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Toko-Swix Sport AG**
**9450 Altstätten (CH)**

(72) Inventors:
- **SIEGMANN, Konstantin**
  **8606 Greifensee (CH)**
- **INAUEN, Jan**
  **8610 Uster (CH)**
- **WINKLER, Martin**
  **8853 Lachen (CH)**
- **RAUNJAK, Udo**
  **9451 Kriessern (CH)**

(74) Representative: **Schmitz, Joseph**
**Isler & Pedrazzini AG**
**Giesshübelstrasse 45**
**Postfach 1772**
**8027 Zürich (CH)**

# (54) LUBRICATING COMPOSITION FOR WINTER SPORT EQUIPMENT

(57) It is an object of the present invention to provide a lubricating composition for a polymer gliding surface of a winter sport equipment, said lubricating composition comprising at least one hydrophobic compound, characterized in that the hydrophobic compound is capable of forming a covalent bond to the polymer gliding surface, and wherein the formation of the covalent bond to the polymer gliding surface is activatable by exposing the hydrophobic compound to radiation energy and/or thermal energy.

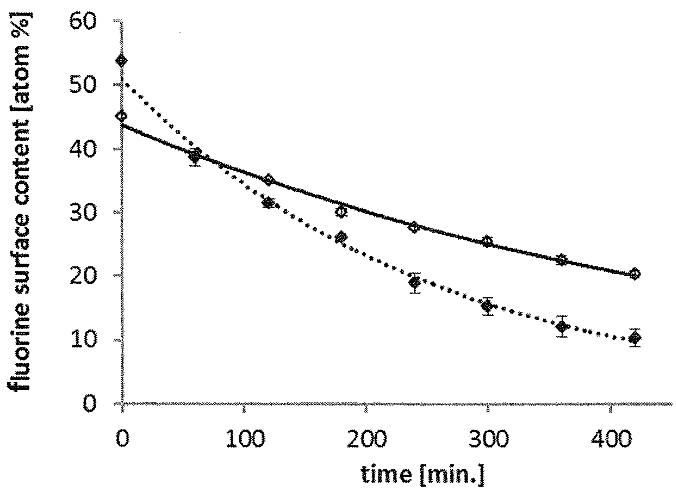


FIG. 1

EP 3 254 768 A1

**Description**

TECHNICAL FIELD

The present invention relates to lubricating compositions for the gliding surface of a winter sport equipment such as for example skis, which exhibit improved resistance against abrasion.

PRIOR ART

Classical, high-end ski wax consists of compositions comprising one or more (per)fluoroalkane. These compositions, when applied to the gliding surface of a winter sports equipment such as a ski, are able to reduce the sliding resistance of skis on snow.

So far, when "waxing" skis, the wax has been applied in generous amounts onto the gliding surface of the ski, for example by powdering the gliding surface and then "ironing" this surface with a general-purpose iron or a dedicated wax iron. The heat provided by the ironing causes the wax to melt and wet, and/or wick into, the polymer gliding surface of the ski, and the wax is then left to cool and harden. Then, excess wax is peeled off the gliding surface using a plastic blade, and optionally the gliding surface is brushed to finish.

The issue with such traditional waxes is endurance against abrasion, or stated otherwise, the durability of the waxing on the gliding surface.

While durability of regular waxes is of no great concern in recreational skiing (you just visit a shop for an overnight re-waxing), the durability of high-performance ski waxes is an important issue in professional ski racing, where fractions of seconds can, and often do, determine the winner of a competition, and the abrasive forces to which a gliding surface is exposed are so intense that the waxes are often abraded before the race is over, slowing down the athlete.

There is therefore a general need to provide compositions, as well as treatments, that allow for a more durable lubrication treatment of a gliding surface of skis, snowboards and such, and which nonetheless provide for the same, or an even improved, reduction of the sliding resistance.

EP 2 292 704 A1 discloses a lubricating composition for winter sport equipment that comprises carbon nanotubes.

EP 0 421 303 A2 discloses a lubricating composition for winter sport equipment that comprises (i) at least one fluorine compound selected from the group consisting of an alcohol containing a polyfluoroalkyl group, and ester containing a polyfluoroalkyl group, a (meth)acrylic acid ester polymer containing a polyfluoroalkyl group and fluorinated graphite, and (ii) at least one member selected from the group consisting of paraffin wax and a polyfluoroalkane.

EP 0 303 055 A1 discloses a lubricating composition for winter sports equipment comprising a paraffinic wax and finely subdivided polytetrafluoroethylene powder, said polytetrafluoroethylene being uniformly dispersed and incorporated in the paraffinic wax.

WO 2016/042323 A1 discloses a composition for imparting superhydrophobicity to the gliding surface of a ski, where the chemical component of the composition responsible for the superhydrophobicity is a curable polymer. The curing of the polymer increases the hardness and wear resistance of the polymer coating, but nowhere it is stated that the polymer is covalently attached to the gliding surface.

WO03/033608 A1 discloses a lubricant composition for use in snow sliders, in which paraffin wax is combined with a fluoropolymer micropowder.

EP 1 735 395 B1 discloses a lubricant composition for winter sport equipment containing paraffin wax and a hydrophobized silica, where the hydrophobized silica is deemed to reduce the abrasion of the lubricating composition to render it more durable.

SUMMARY OF THE INVENTION

The present invention provides for a lubricating composition that alleviates or entirely eliminates the above-mentioned shortcomings.

The lubricating composition of the present invention provides for a lubricating composition that allows reducing the friction between a gliding surface of a ski or snowboard and the snow, while at the same time exhibiting good resistance against abrasion, due to the formation of a covalent bond between the hydrophobic compound and the gliding surface. The lubricating composition of the present invention is further advantageous in that it can be dosed and applied easily in liquid form to the gliding surface on-site, i.e. on slope, without the need for a brush or wax combs.

It is an object of the present invention to provide a lubricating composition for a polymer gliding surface of a winter sport equipment, said lubricating composition comprising at least one hydrophobic compound, characterized in that the hydrophobic compound is capable of forming a covalent bond to the polymer gliding surface, and wherein the formation of the covalent bond to the polymer gliding surface is activatable by exposing the hydrophobic compound to

radiation energy and/or thermal energy.

It is another object of the present invention to provide a use of a hydrophobic compound according to the above for lubricating the gliding surface of winter sport equipment.

It is an yet another object of the present invention to provide a process for lubricating or priming a polymer gliding surface of a winter sport equipment, comprising the steps of, in this order, a. applying a lubricating composition according to claim 1 to a gliding surface of a winter sport equipment, preferably by spray coating, b. exposing the applied lubricating composition to a quantity of radiation energy and/or thermal energy for allowing the hydrophobic compound to form a covalent bond to the polymer gliding surface.

Further embodiments of the invention are laid down in the dependent claims.

FIGURES

Figure 1 shows the decrease of fluorine content according to spinning time in a water-ice suspension at the surface of discs treated with the inventive composition (1H, 1H, 2H, 2H-heptadecafluoro-1-decyl 4-azidotetrafluorobenzoate, empty lozenges, solid line) and commercially available fluorinated ski-wax (filled lozenges, dotted line).

DESCRIPTION OF PREFERRED EMBODIMENTS

It is an object of the present invention to provide a lubricating composition for a polymer gliding surface of a winter sport equipment, said lubricating composition comprising at least one hydrophobic compound, characterized in that the hydrophobic compound is capable of forming a covalent bond to the polymer gliding surface, and wherein the formation of the covalent bond to the polymer gliding surface is activatable by exposing the hydrophobic compound to radiation energy and/or thermal energy.

In a preferred embodiment of the lubricating composition of the present invention, the hydrophobic compound comprises a (per)fluorinated moiety.

In a preferred embodiment of the lubricating composition of the present invention, the lubricating composition is in a liquid form, because this allows to easily dose and apply the lubricating composition to the gliding surface of a winter sport equipment. In such liquid form, the hydrophobic compound of the lubricating composition is dissolved in an organic solvent.

In an embodiment of the lubricating composition of the present invention, the lubricating composition for a polymer gliding surface of a winter sport equipment comprises a hydrophobic compound having a molecular structure according to formula A - B - C - D (I), where A represents a (per)fluorinated moiety, B represents a linker moiety, where C represents an activation moiety and D represents a reactive moiety, characterized in that the activation moiety C is a moiety capable of activating the reactive moiety D upon taking up radiation energy and the activation of the reactive moiety allows for the formation of the covalent bond to the polymer gliding surface. It is further noted that preferably the activation moiety C is capable of stabilizing the activated reactive moiety D.

In an alternative embodiment of the lubricating composition of the present invention, the lubricating composition for a polymer gliding surface of a winter sport equipment comprises a hydrophobic compound having a molecular structure according to formula A - B - C - D (I), where A represents a (per)fluorinated moiety, B represents a linker moiety, where C represents an stabilizing moiety and D represents a thermoreactive moiety, characterized in that the stabilizing moiety C is a moiety capable of stabilizing the thermoreactive moiety D upon exposure to a reaction temperature, i.e. upon taking up thermal energy, and the exposure of the thermoreactive moiety D to a reaction temperature allows for the formation of the covalent bond to the polymer gliding surface. The reaction temperature can be in the range of 150°C to 180°C, in which case care must be taken to provide a polymer gliding surface that is capable of resisting exposure to the reaction temperature.

In an alternative embodiment of the lubricating composition of the present invention, the lubricating composition for a polymer gliding surface of a winter sport equipment comprises a hydrophobic compound has a molecular structure according to formula

D - C- B- A- B - C - D (II),

where A represents a (per) fluorinated moiety, B represents a linker moiety, where C represents an activation moiety and D represents an reactive moiety, characterized in that the activation moiety C is a moiety capable of activating the reactive moiety D upon taking up radiation energy and the activation of the reactive moiety allows for the formation of the covalent bond to the polymer gliding surface. In contrast to the hydrophobic compound according to formula A - B

- C - D (I), the hydrophobic compound according to formula D - C- B- A- B - C - D (II) includes two terminal reactive moieties per molecule that allow for the formation of the covalent bond to the polymer gliding surface.

In an alternative embodiment of the lubricating composition of the present invention, the lubricating composition for a polymer gliding surface of a winter sport equipment comprises a hydrophobic compound having a molecular structure according to formula

D - C- B- A- B - C - D (II),

where A represents a (per)fluorinated moiety, B represents a linker moiety, where C represents an stabilizing moiety and D represents a thermoreactive moiety, characterized in that the stabilizing moiety C is a moiety capable of stabilizing the thermoreactive moiety D upon exposure to a reaction temperature, i.e. upon taking up thermal energy, and the exposure of the thermoreactive moiety D to a reaction temperature allows for the formation of the covalent bond to the polymer gliding surface. In contrast to the hydrophobic compound according to formula A - B - C - D (I), the hydrophobic compound according to formula D - C- B- A- B - C - D (II) includes two terminal reactive moieties per molecule that allow for the formation of the covalent bond to the polymer gliding surface.

Within the context of the present disclosure, the term "(per)fluorinated" relates to either perfluorinated or fluorinated.

The (per)fluorinated moiety is in essence responsible for the hydrophobic quality of the hydrophobic compound, and is generally represented by a short alkyl residue linked to a perfluorinated alkyl residue or to either side of a perfluorinated alkyl residue in the case of a hydrophobic compound according to formula (II). It has been found that the longer the carbon backbone of the perfluorinated alkyl residue is, the higher the resistance against abrasion of the hydrophobic compound is. However, at laboratory lab scale, it has been difficult to synthesize hydrophobic compounds that carry a perfluorinated alkyl residue longer than 10 carbons, but that this is not limiting to the lubrication compounds of the present invention.

The linker moiety is in essence responsible for linking the (per)fluorinated moiety to the activation moiety of the hydrophobic compound.

The activation moiety is in essence responsible for absorbing radiation energy and to transfer the absorbed energy to the reactive moiety in order to activate it. It preferably has the further property of stabilizing the activated reactive moiety. Once activated, the reactive moiety is capable of forming a covalent bond to the polymer molecules of the gliding surface. The activation moiety is preferably a moiety capable of absorbing UV radiation, and in particular UV radiation having a wavelength in the range of 200 to 380 nm, such as a chromophore.

In an embodiment of the lubricating composition of the present invention, the formation of the covalent bond to the polymer gliding surface is carried out through nitrene C-H or C-C insertion or ketyl C-H or C-C insertion. The nitrene C-H or C-C insertion or ketyl C-H or C-C insertion is particularly advantageous in the case where the polymer gliding surface is made of a polyolefin such as polyethylene, since polyolefins and in particular polyethylene are chemically inert materials.

Nitrene C-H or C-C insertion is afforded by choosing a reactive moiety D that is capable of generating a nitrene upon activation by the activating moiety C, such as for example an azide or a sulfonyl azide.

Ketyl C-H or C-C insertion is afforded by choosing a reactive moiety D that is capable of generating a ketyl radical upon activation by the activating moiety C, such as for example benzophenone moiety, which in that case unites the activating and reactive moiety in the benzophenone moiety. An exemplary hydrophobic compound capable of formation of the covalent bond to the polymer gliding surface through ketyl C-H or C-C insertion is the hydrophobic compound according to formula (III):

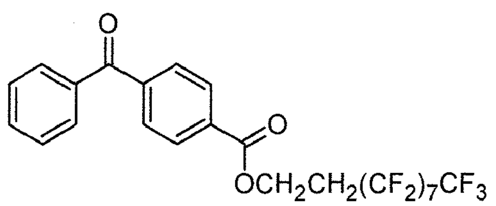
(III)

In a much preferred embodiment of the lubricating composition of the present invention, the reactive moiety D is an azide or a sulfonyl azide.

In a preferred embodiment of the lubricating composition of the present invention, the activation moiety C is thus a p-perfluorophenyl or p-phenyl residue, in combination with a reactive moiety D that is an azide or a sulfonyl azide, i.e. a p-perfluorophenyl in combination with an azide, a p-perfluorophenyl in combination with a sulfonyl azide, a p-phenyl in combination with a sulfonyl azide, or a p-phenyl in combination with an azide. The aforementioned combinations of

activation moiety and reactive moiety are particularly useful, since the aromatic activation moieties also help in stabilizing the nitrene formed at the reactive moiety, thus making possible a controlled formation of covalent bonds to the polymer gliding surface. In a much preferred embodiment of the present invention, the activation moiety C is a p-perfluorophenyl, because it has been found that the use of the perfluorophenyl activation moiety results in a higher covalent binding efficiency. The below formula shows the case where in the hydrophobic compound, the activation moiety C is p-perfluorophenyl:

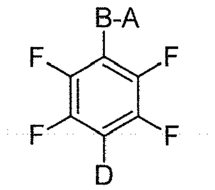

In a preferred embodiment of the lubricating composition of the present invention, the (per)fluorinated moiety is a residue according to formula $-(CH_2)_n-R$ (IV), where n is a natural number of from 1 to 4, and where R is chosen from linear (per)fluoroalkyl residues, branched (per)fluoroalkyl residues, (per)fluorocycloalkyl residues, and (per)fluoroaryl residues. In a much preferred embodiment of the lubricating composition of the present invention, R is a linear or branched (per)fluoroalkyl residue according to formula $-C_mF_{2m+1}$ ($IV_R$), where m is a natural number of from 1 to 15, preferably of from 3 to 13 and most preferably is 8, 9 or 10. As an example, the below formula shows R in the case where R is a linear perfluoroalkyl residue according to formula $-C_mF_{2m+1}$ ($IV_R$), where m is 8:

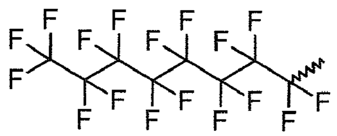

In an alternative embodiment of the lubricating composition of the present invention, R is a (per)fluorocycloalkyl residue according to formula $-C_mF_{2m-1}$ ($VI_R$), where m is 5, 6, 7 or 8 or is a (per)fluoroaryl residue, such as $-C_6F_5$.

As an example, the below formula shows R in the case where R is a perfluorocycloalkyl residue according to formula $-C_mF_{2m-1}$ ($VI_R$), where m 6:

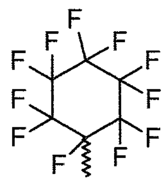

In the case where a hydrophobic compound according to formula D - C- B- A- B - C - D (II) is used in the lubricating composition of the present invention, A represents a (per)fluorinated moiety according to formula $-(CH_2)_n-R-(CH_2)_n-$ (VII), where n is a natural number of from 1 to 4, and where R is chosen from linear (per)fluoroalkyl residues, branched (per)fluoroalkyl residues, (per)fluorocycloalkyl residues, and (per)fluoroaryl residues. In a much preferred embodiment of the lubricating composition of the present invention, R is a linear or branched (per)fluoroalkyl residue according to formula $-C_mF_{2m}$ ($VII_R$), where m is a natural number of from 1 to 15, preferably of from 3 to 13 and most preferably is 8, 9 or 10.

In a preferred embodiment of the lubricating composition of the present invention, the linker moiety is chosen from ester, thioester, amide, thioether, ether, or aliphatic linker moieties, i.e. of the formula -C(O)O- (ester linker moiety), -C(O)S- (thioester linker moiety), -NHCO- (amide linker moiety), -O- (ether linker moiety)),-S- (thioether linker moiety), $-C_nH_{2n}-$ (aliphatic linker moiety). While the aforementioned linker moieties are not meant to limit the possible linker moieties, they nonetheless represent the most commonly used linker moieties that result from e.g. esterification of a precursor alcohol such as a fluorotelomer alcohol with a precursor carboxylic acid or the corresponding carboxylic acid halide, such as a perfluorobenzoyl chloride. Such ester linker moieties are preferred because of the commercial availability of suitable precursor molecules.

As a non-limiting example of the hydrophobic compound of the lubricating composition of the present invention, 1H, 1H, 2H, 2H-heptadecafluoro-1-decyl 4-azidotetrafluorobenzoate can be named:

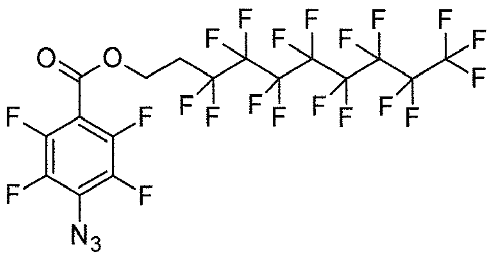

1H, 1H, 2H, 2H-heptadecafluoro-1-decyl 4-azidotetrafluorobenzoate

In a preferred embodiment of the present invention, the polymer gliding surface is a polyamide, polyester or polyolefin gliding surface, and preferably is a polyolefin gliding surface such as a polyethylene gliding surface, which ranks among the most used gliding surfaces in skis and snowboards.

In a preferred embodiment of the lubricating composition of the present invention, the lubricating composition further comprises an organic solvent in which the hydrophobic compound is dissolved such as acetone or fluorinated organic solvent, and where preferably the organic solvent is a fluorinated organic solvent and most preferably is a (per)fluorinated polyether solvent. The organic solvents are preferably chosen from organic solvents that do not solidify and can evaporate under winter conditions, i.e. at temperatures below 0 °C, which allows easy applying and dosing of the lubricating composition to the gliding surface, e.g. by spraying or painting.

It is another object of the present invention to provide a use of a lubricating composition according to the above for lubricating the gliding surface of winter sport equipment.

It is another object of the present invention to provide a use of a lubricating composition according to the above as a wax primer for the polymer gliding surface of a winter sport equipment such as for example a ski or snowboard, preferably as a fluorinated wax primer for the polymer gliding surface of a winter sport equipment. After the hydrophobic compound molecules comprised in the lubricating composition are activated and have formed covalent bonds to the polymer gliding surface, the bound layer of hydrophobic compound molecules acts as a primer that enhances the adhesion of the wax to the polymer gliding surface. In the case where the wax is a fluorinated wax, the bound layer of hydrophobic compound further acts as a compatibilizer, because the perfluorinated moieties extending from the gliding surface bind the fluorinated wax whereas the covalent bond to the polymer gliding surface anchors the hydrophobic compound. The enhanced adhesion and anchoring in turn reduce the abrasion of the wax, thereby providing a more durable waxing.

It is an yet another object of the present invention to provide a process for lubricating or priming a polymer gliding surface of a winter sport equipment, comprising the steps of, in this order, a. applying a lubricating composition according the above to a gliding surface of a winter sport equipment, preferably by spray coating, b. exposing the applied lubricating composition to a quantity of radiation energy and/or thermal energy for allowing the hydrophobic compound to form covalent bonds to the polymer gliding surface.

The lubricating composition may be painted or sprayed onto the gliding surface, and is preferably sprayed onto the gliding surface. To this end, the lubricating composition can be provided in pressurized spray can or in a container featuring a push operated spray pump. It is thus also an object of the present invention to provide a pressurized spray container, or a container featuring a push operated spray pump, comprising the lubricating composition of the present invention.

The lubricating composition is preferably applied to the gliding surface in a manner that the lubricating composition forms a continuous layer on the gliding surface, such that the hydrophobic compound may uniformly be bound to the polymer gliding surface.

In a preferred embodiment, the applied lubricating composition is allowed to dry, i.e. any organic solvent comprised in the lubricating composition is allowed to evaporate before exposing the applied lubricating composition to a quantity of radiation energy and/or thermal energy.

After application and preferably after drying, the hydrophobic compound of the lubricating composition is exposed to a quantity of radiation energy and/or thermal energy sufficient for allowing the hydrophobic compound to form covalent bonds to the polymer gliding surface. In the case where radiation energy is supplied, the radiation is preferably supplied in the form of UV radiation, preferably of UV radiation having a wavelength in the range of 200 to 380 nm.

In a preferred embodiment of the process for lubricating or priming a polymer gliding surface a winter sport equipment according to the present invention, the process further comprises the step of, subsequently, c. applying a wax, preferably a fluorinated wax comprising at least one (per)fluoroalkane to the thus formed polymer gliding surface.

EXAMPLES

A grease-free and dry polyethylene disc having a diameter of 40 mm was spray-coated with a solution of the compound 1H, 1H, 2H, 2H-heptadecafluoro-1-decyl 4-azidotetrafluorobenzoate in perfluoroether solvent (Galden HT80, available from Solvay S.A., Belgium). After the solvent had evaporated, the thus coated polyethylene disc was exposed to the radiation of a 200W/cm mercury vapor lamp emitting UV radiation to allow the compound to covalently attach to the polyethylene material.

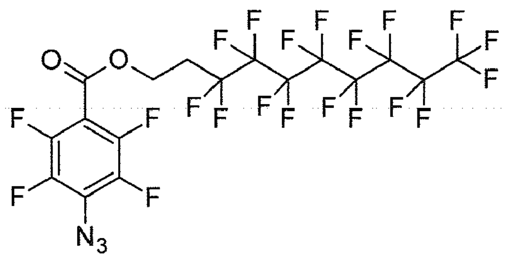

1H, 1H, 2H, 2H-heptadecafluoro-1-decyl 4-azidotetrafluorobenzoate

As a comparative, a grease-free and dry polyethylene discs having a diameter of 40 mm was coated with a commercially available fluorinated ski-wax according to the manufacturer's instructions (HelX liquid 2.0, available from Toko-Swix Sport AG).

The discs were then connected to the shaft of a motor and spun in water-ice suspension such that the speed of the speed of the disc reaches 100 km/h at its rim, which is believed to be a typical speed of a ski racer. The small (about 5 x 5 x 5 mm) ice cubes collide with the polyethylene disc surface and thus abrade material from the disc surface. For both the inventive and the comparative example, the fluorine content at the surface of the disc was measured using XPS (X-ray photoelectron spectroscopy) as a function of time. The results are displayed in Figure 1.

As can be seen from the above Figure 1, the fluorine content at the surface of the disc decreases with spinning time in the water-ice suspension in both cases, but decreases more slowly for the disc treated with the inventive composition (empty lozenges, solid line) when compared to the disc treated with commercially available fluorinated ski-wax (filled lozenges, dotted line). This indicates that the inventive composition is indeed more resistant against abrasion than traditional fluorinated ski-wax.

Exponentials were fitted for both data sets. The correlation coefficients ($R^2$) were 0.994 for 1H, 1H, 2H, 2H-heptadecafluoro-1-decyl 4-azidotetrafluorobenzoate and 0.995 for the fluorinated ski-wax, indicating a good correlation. The exponential behavior of fluorine surface concentration versus abrasion time can be explained if one assumes a random-collision/abrasion model. Thereby, it is assumed that the ice cubes collide with and abrade material from the surface. Because each collision of an ice cube, depending on the strength of the collision, leads to an erosion of the surface, fluorine surface concentration is reduced. The reduction of fluorine surface concentration, S, with time is proportional to the available, fluorine containing surface, S, because collisions are at random (see equation 1) (In the beginning there is ample surface covered with fluorine available and almost every strong enough hit reduces fluorine surface concentration. As abrasion proceeds, fluorine covered surface becomes scarcer, there are many strong hits that miss this surface and therefore *dS*/*dt* decreases).

$$-\frac{dS}{dt} = kS$$

Eq. 1 The reduction of fluorine containing surface (*S*) with time is proportional to the available fluorine containing surface.

Integration of equation 1 yields fluorine surface concentration as a function of time (equation 2).

$$S(t) = S_0 e^{-kt}$$

Eq. 2 Fluorine surface concentration S as a function of time. *(So* is the initial fluorine surface concentration and

*k* is the decay constant).

The exponential fit for the data points from Figure 1 yields initial fluorine surface concentration $S_0$ and decay constant *k* for surfaces treated with 1H, 1H, 2H, 2H-heptadecafluoro-1-decyl 4-azidotetrafluorobenzoate, as well as for surfaces covered with the fluorinated ski-wax. It is seen that $S_0$ is higher for the fluorinated ski-wax ($S_0$ = 51%) than for surfaces photografted with 1H, 1H, 2H, 2H-heptadecafluoro-1-decyl 4-azidotetrafluorobenzoate ($S_0$ = 44%). However, after a certain time (about an hour in Figure 1), surface fluorine concentration S becomes larger in surfaces treated with 1H, 1H, 2H, 2H-heptadecafluoro-1-decyl 4-azidotetrafluorobenzoate compared to the surface covered with fluorinated ski-wax. This demonstrates the enhanced durability of a surface treated with 1H, 1H, 2H, 2H-heptadecafluoro-1-decyl 4-azidotetrafluorobenzoate compared to a surface covered with a fluorinated ski-wax. Hence, $|k|$ is larger for the fluorinated ski-wax ($|k|$ = 3.91 $10^{-3}$ $min^{-1}$) than for 1H, 1H, 2H, 2H-heptadecafluoro-1-decyl 4-azidotetrafluorobenzoate ($|k|$ = 1.84 $10^{-3}$ $min^{-1}$). This observation can be explained in the random-collision/abrasion model assuming stronger bound 1H, 1H, 2H, 2H-heptadecafluoro-1-decyl 4-azidotetrafluorobenzoate: A harder and therefore less frequent collision of an ice cube is required to remove 1H, 1H, 2H, 2H-heptadecafluoro-1-decyl 4-azidotetrafluorobenzoate compared to the fluorinated ski-wax.

## Claims

1. A lubricating composition for a polymer gliding surface of a winter sport equipment, said lubricating composition comprising at least one hydrophobic compound, **characterized in that** the hydrophobic compound is capable to form a covalent bond to the polymer gliding surface, and wherein the formation of the covalent bond to the polymer gliding surface is activatable by exposing the hydrophobic compound to radiation energy and/or thermal energy, and wherein preferably the hydrophobic compound comprises a (per)fluorinated moiety.

2. The lubricating composition for a polymer gliding surface of a winter sport equipment according to claim 1, wherein the hydrophobic compound has a molecular structure according to formula

   $$A - B - C - D \text{ (I) or } D - C- B- A- B - C - D \qquad \text{(II)},$$

   where A represents a (per) fluorinated moiety, B represents a linker moiety, where C represents an activation moiety and D represents an reactive moiety, **characterized in that** the activation moiety C is a moiety capable of activating the reactive moiety D upon taking up radiation energy and the activation of the reactive moiety allows for the formation of the covalent bond to the polymer gliding surface

3. The lubricating composition according to claim 1 or 2, where the formation of the covalent bond to the polymer gliding surface is carried out through nitrene C-C or C-H insertion or ketyl C-C or C-H insertion of the hydrophobic compound.

4. The lubricating composition according to any preceding claim, where the (per)fluorinated moiety is a residue according to formula $-(CH_2)_n-R$ (IV), where n is a natural number of from 1 to 4, and where R is chosen from linear (per)fluoroalkyl residues, branched (per)fluoroalkyl residues, (per)fluorocycloalkyl residues, and (per)fluoroaryl residues.

5. The lubricating composition according to claim 4, where R is a linear or branched (per)fluoroalkyl residue according to formula $-C_mF_{2m+1}$ ($IV_R$), where m is a natural number of from 1 to 15, preferably of from 3 to 13 and most preferably is 8, 9 or 10.

6. The lubricating composition according to any claim 4, where R is a (per)fluorocycloalkyl residue according to formula $-C_mF_{2m-1}$ ($V_R$), where m is 6, and preferably is 5, 6, 7 or 8 or where R is a (per)fluoroaryl residue such as - $C_6F_5$.

7. The lubricating composition according to any of the preceding claims, where the linker moiety is chosen from moieties of the formula -C(O)O-, -NHCO-, -O-,-S-, $-C_nH_{2n}-$, preferably of from -C(O)O-.

8. The lubricating composition according to any of claims 2 to 7, where the activation moiety C is a *p*-perfluorophenyl or *p*-phenyl residue, and/or where the reactive moiety D is an azide or a sulfonyl azide.

9. The lubricating composition according to any of the preceding claims, where the polymer gliding surface is a polyamide, polyester or polyolefin gliding surface, and preferably is a polyolefin gliding surface.

**10.** The lubricating composition according to any preceding claim, where the lubricating composition is in a liquid form and further comprises an organic solvent, and where preferably the organic solvent is a fluorinated organic solvent and most preferably is a (per)fluorinated polyether solvent.

**11.** Use of a lubricating composition according to any of the preceding claims for lubricating the gliding surface of a winter sport equipment.

**12.** Use of a lubricating composition according to any of the claims 1 to 10 as a wax primer for the gliding surface of a winter sport equipment, preferably as a fluorinated wax primer.

**13.** A process for lubricating or priming a polymer gliding surface a winter sport equipment, comprising the steps of, in this order,

a. applying a lubricating composition according to claim 1 to 10 to a gliding surface of a winter sport equipment, preferably by spray coating,
b. exposing the applied lubricating composition to a quantity of radiation energy and/or thermal energy for allowing the hydrophobic compound to form a covalent bond to the polymer gliding surface.

**14.** The process according to claim 13, wherein the process further comprises the step of, subsequently,

c. applying a wax, preferably a fluorinated wax comprising at least one (per)fluoroalkane to the thus formed polymer gliding surface.

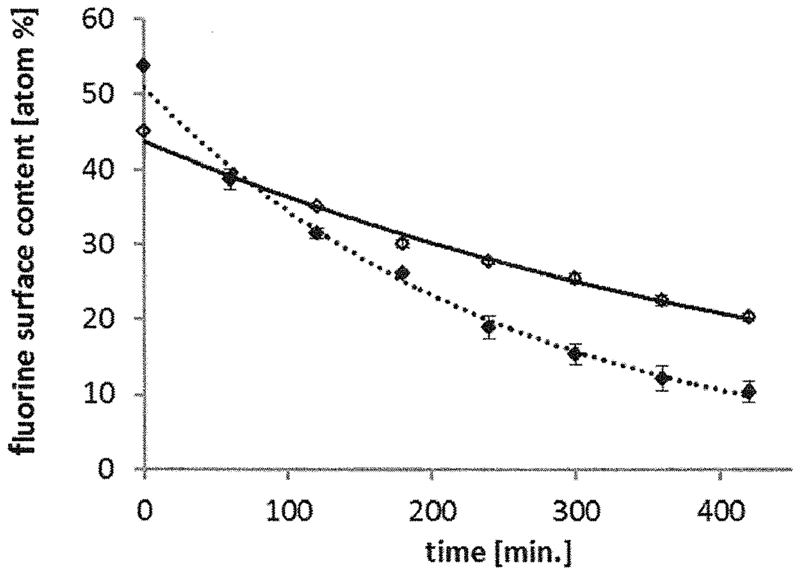
fluorine surface content [atom %]
60
50
40
30
20
10
0
0
100
200
300
400
time [min.]

FIG. 1

Europäisches Patentamt
European Patent Office
Office européen des brevets

# EUROPEAN SEARCH REPORT

Application Number
EP 16 17 3589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 309 453 A (REINER ROLAND ET AL) 5 January 1982 (1982-01-05) * column 1, lines 1-55; claims * * column 2, lines 20-25 * | 1-10 | INV. B05D5/08 C09G3/00 C08J7/12 |
| X | US 2014/206251 A1 (STOKES KRISTOFFER K [US]) 24 July 2014 (2014-07-24) * paragraphs [0064] - [0066]; claims * | 1 | |
| X | MARK A. HARMER: "Photomodification of surfaces using heterocyclic azides", LANGMUIR, vol. 7, no. 10, 1 October 1991 (1991-10-01), pages 2010-2012, XP055288889, US ISSN: 0743-7463, DOI: 10.1021/la00058a007 | 1 | |
| Y | * Introduction, Results and discussion * | 13,14 | |
| X | DE 102 31 642 A1 (HOLMENKOL DIV OF LOBA GMBH & C [DE]) 12 February 2004 (2004-02-12) | 1,11,12 | TECHNICAL FIELDS SEARCHED (IPC) |
| Y | * paragraphs [0031] - [0034]; claims; examples * | 13,14 | C08J B05D C09G |

The present search report has been drawn up for all claims

| Place of search | Date of completion of the search | Examiner |
|---|---|---|
| Munich | 12 December 2016 | Frison, Céline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

4

EPO FORM 1503 03.82 (P04C01)

# ANNEX TO THE EUROPEAN SEARCH REPORT ON EUROPEAN PATENT APPLICATION NO. EP 16 17 3589

This annex lists the patent family members relating to the patent documents cited in the above-mentioned European search report. The members are as contained in the European Patent Office EDP file on The European Patent Office is in no way liable for these particulars which are merely given for the purpose of information.

12-12-2016

| Patent document cited in search report | Publication date | Patent family member(s) | Publication date |
|---|---|---|---|
| US 4309453 A | 05-01-1982 | DE 2902959 A1 | 14-08-1980 |
| | | EP 0014843 A2 | 03-09-1980 |
| | | JP S55106241 A | 14-08-1980 |
| | | US 4309453 A | 05-01-1982 |
| US 2014206251 A1 | 24-07-2014 | CN 105189625 A | 23-12-2015 |
| | | EP 2945980 A1 | 25-11-2015 |
| | | JP 2016509101 A | 24-03-2016 |
| | | KR 20150108880 A | 30-09-2015 |
| | | US 2014206251 A1 | 24-07-2014 |
| | | WO 2014113618 A1 | 24-07-2014 |
| DE 10231642 A1 | 12-02-2004 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2292704 A1
- EP 0421303 A2
- EP 0303055 A1
- WO 2016042323 A1
- WO 03033608 A1
- EP 1735395 B1